# EUROPÄISCHE PATENTSCHRIFT

(11) **EP 2 530 363 B1**
(45) Veröffentlichungstag und Bekanntmachung des Hinweises auf die Patenterteilung: **21.02.2018**
(21) Anmeldenummer: 12003713.0
(22) Anmeldetag: 10.05.2012
(51) Int. Cl.: F16J 15/10, F16J 15/12, F16L 19/02

(54) **Dichtung und Gehäuse mit einer solchen Dichtung**
Seal and housing with such a seal
Joint et boîtier doté de celui-ci

(30) Priorität: 31.05.2011 DE 102011102922
(43) Veröffentlichungstag der Anmeldung: 05.12.2012
(73) Patentinhaber: Diehl Metering GmbH, 91522 Ansbach (DE)
(72) Erfinder: Gronauer, Christoph, 90547 Stein (DE); Riegel, Herbert, 91617 Oberdachstetten (DE)
(74) Vertreter: Diehl Patentabteilung

(56) Entgegenhaltungen:
- EP-A1- 0 354 272
- EP-A1- 1 544 481
- WO-A1-00/17548
- DE-A1- 4 022 558
- FR-A1- 2 921 142
- US-A- 4 674 756
- US-A- 5 413 359
- US-A1- 2006 070 437

## Beschreibung

Die Erfindung betrifft eine Dichtung für den Verbindungsbereich zwischen einem Gehäuseanschlussstutzen eines Durchflussmessers sowie einem Rohrende oder einer Rohrtülle, wobei die Dichtung eine erste Dichtkomponente aus weichem Material und eine zweite Dichtkomponente aus härterem Material aufweist.

Durchflussmesser werden zur Erfassung der durch eine Hohlleitung durchströmenden Flüssigkeitsmenge eingesetzt. (Siehe US-A-2006/0070437). Der Durchflussmesser wird dabei in das Rohr derart eingesetzt, dass auch durch den Durchflussmesser die durch das Rohr strömende Flüssigkeit geführt wird. Dazu wird der jeweilige Gehäuseanschlussstutzen des Durchflussmessers zwischen die beiden Rohrenden oder daran angeordneten Rohrtüllen eingesetzt. Zur Abdichtung des Verbindungsbereichs zwischen dem Gehäuseanschlussstutzen sowie dem Rohrende oder der Rohrtülle sind Flachdichtungen vorgesehen. Bisher genügten diese Flachdichtungen den Anforderungen, da das Gehäuse des Durchflussmessers aus Messing, welches sich durch eine geringe Temperaturausdehnung auch bei Durchfluss von Warmwasser auszeichnet. Darüber hinaus bestehen die Rohrleitungen üblicherweise aus Kupfer und haben eine gewisse Länge (ca. 1 Meter), wodurch sie relativ flexibel sind. Die bisher üblichen Dichtungen können bei Temperaturschwankungen oder anderen geringfügigen Bewegungen die Verbindungsstelle gut abdichten.
Besteht dagegen das Gehäuse des Durchflussmessers aus Kunststoff, sind diese Bauteile bei Temperaturschwankungen entsprechenden Temperaturausdehnungen unterworfen, so dass einfache Flachdichtungen nicht mehr die ausreichende Dichtigkeit bieten.
Aus der WO 00/17548 A1 ist ein Dichtungselement bekannt, welches aus einem metallischen Dichtungshalter und einer innenliegenden, in einer Nut gehaltenen Kunststoffdichtung besteht, wobei der Dichtungshalter die Dichtung axial beidseitig überragt.

In der EP 0 354 272 A1 ist eine Zweikomponentendichtung beschrieben, welche aus einem äußeren, praktisch undeformierbaren und aus einem inneren, bündig anschließenden und deformierbaren Dichtring besteht.

Auch aus der US 6,565,124 B2 ist ein Dichtring aus zwei unterschiedlich harten Dicht-ringkomponenten bekannt, welche aneinander bündig fluchtend befestigt sind.

In der EP 1 391 640 A1 ist schließlich ein Dichtungsring aus einem formstabilen, ringförmigen Grundkörper mit einer axialen Ringnut bekannt, in welcher ein aus gummielastischem Material bestehender Dichtkörper gehalten ist.

Der vorliegenden Erfindung liegt die Aufgabe zugrunde, eine Dichtung für den Verbindungsbereich zwischen einem Gehäuseanschlussstutzen eines Durchflussmessers sowie einem Rohrende oder einer Rohrtülle zur Verfügung zu stellen, welche auch den Anforderungen bei Temperaturschwankungen sowie den damit verbundenen Temperaturausdehnungen der an dem Verbindungsbereich angrenzenden Bauteile gerecht wird.

Diese Erfindung wird durch die gesamte Lehre des Patentanspruchs 1 gelöst. Vorteilhafte Weiterbildungen der Erfindung ergeben sich aus den Unteransprüchen 2 - 11. Ein vorteilhaftes Gehäuse eines Durchflussmessers wird in den Ansprüchen 12 und 13 gelehrt.

Die erfindungsgemäße Dichtung weist eine erste Dichtkomponente aus weichem Material auf und zusätzlich mindestens eine zweite Dichtkomponente aus einem Material, das härter ist als das der ersten Dichtkomponente. Eine solche Dichtung eignet sich besonders bei Durchflussmessern, deren Gehäuse aus Kunststoff besteht, da dieses bei Veränderung der Temperatur, insbesondere der Temperatur des durchfließenden Mediums, eine relativ hohe Wärme- bzw. Temperaturausdehnung aufweist. Der durch diese Wärmeausdehnung verursachte oder der an der Einbausituation des Durchflussmessers vorgefundene Längenversatz kann durch diese Dichtung in idealer Weise ausgeglichen werden, welche sich mit den beiden verschiedenen Dichtkomponenten reversibel verhält.

Ein komplettes Zusammenpressen und somit die Zerstörung der gesamten Dichtung wird durch die harte Dichtkomponente verhindert, während die weiche Dichtkomponente die Abdichtung aufrecht erhält. Insbesondere kann die Dichtung im Flanschbereich des Rohrendes oder der Rohrtülle und dem stirnseitigen Bereich des Gehäuseanschlussstutzens positioniert sein. Dabei kann sie zweckmäßigerweise um den gesamten Umfang des Flansches bzw. des Gehäuseanschlussstutzens gelegt sein.

Die zweite Dichtkomponente mit dem härteren Material weist eine geringere Stärke als die erste Dichtkomponente mit dem weichen Material auf. Dadurch wird sichergestellt, dass die Abdichtfunktion der Dichtung beim Zusammenpressen der Bauteile zuerst zum Tragen kommt und dann erst die Begrenzungs- bzw. Kraftaufnahmefunktion der harten Dichtkomponente.

Um dies zu realisieren, ist die zweite Dichtkomponente gegenüber der ersten Dichtkomponente zurückversetzt angeordnet, wobei z.B. beide Dichtkomponenten bündig am Flansch des Rohrendes oder der Rohrtülle anliegen und an der vom Rohrende abweisenden Seite eine Stufe bilden können. Beim Einschrauben des Gehäuseanschlussstutzens an das Rohrende oder die Rohrtülle wird sodann zunächst die weiche Dichtkomponente zusammengepresst und erst bei einer weiteren Änderung der geometrischen Abmessungen der Verbindungsstelle, z.B. bei Temperaturschwankungen, die härtere Dichtkomponente beansprucht.

Die erste Dichtkomponente ist im Wesentlichen für die Abdichtung des Verbindungsbereichs und die zweite Dichtkomponente im Wesentlichen für die Kraftaufnahme der Anpresskraft der beiden Bauteile vorgesehen. Die harte Dichtkomponente sorgt gleichzeitig für eine Begrenzung der zusammengepressten Dichtung, verhindert also ein vollständiges Zusammenquetschen. Die zweite Dichtkomponente kann dagegen stets weiterhin ihre Funktion zur Abdichtung übernehmen.

Zweckmäßigerweise können erste und zweite Dichtkomponente in direktem Kontakt zueinander stehen, so dass sich deren jeweilige Funktionen unmittelbar zueinander bzw. zur gesamten Dichtung am betreffenden Verbindungsbereich entfalten bzw. auswirken können. Außerdem ist damit nur ein geringer Platzbedarf erforderlich, ohne dass eine konstruktive Änderung der zu verbindenden Bauteile vorgenommen werden muss.

Die zweite Dichtkomponente kann außen um die erste Dichtkomponente angeordnet sein. Je nach Art oder Einsatzbereich des Durchflussmessers kann auch die erste Dichtkomponente außen um die zweite Dichtkomponente angeordnet sein. Die jeweilige Dichtkomponente kann demnach innen oder außen liegen, d.h. der Längsachse des Rohrs zu- oder abgewandt angeordnet sein.

Die erste und zweite Dichtkomponente können als separate Teile vorgesehen sein. Die Dichtkomponenten können dadurch in kostengünstiger Weise getrennt voneinander hergestellt werden. Je nach Art des Werkstoffs der Dichtkomponenten kann es von Vorteil sein, wenn die beiden Dichtkomponenten nur aneinander liegen und keine stoffschlüssige Verbindung eingehen.

Erste und zweite Dichtkomponente können aber auch miteinander verbunden sein. Die Dichtung kann damit als ein Teil in einfacher Weise in den Verbindungsbereich eingesetzt werden. Die Montage kann sich damit einfacher gestalten.

Die Dichtung kann als Zweikomponenten-Spritzgussteil ausgeführt sein. Die Dichtkomponenten sind auf diese Weise dauerhaft und sicher miteinander verbunden. Als einteilige Dichtung ist diese sodann in einfacher Weise einsetzbar.

Je nach Materialien der Dichtkomponenten kann es auch vorgesehen sein, dass die zweite Dichtkomponente von der ersten Dichtkomponente hinter- oder zumindest teilweise umspritzt ist. Auch dadurch werden die Eigenschaften der beiden unterschiedlichen Werkstoffe in einem Bauteil vereint. Ferner wird die Herstellung einer montagefertigen Dichtung in einem Fertigungsschritt ermöglicht. Es kann eine stoffschlüssige Verbindung hergestellt werden, wie z.B. eine Metall/Kunststoff oder Kunststoff/Kunststoff-Verbindung.

Vorteilhafterweise kann die erste Dichtkomponente aus einem Elastomer, Gummi oder Kautschuk bestehen, welche alle elastische Eigenschaften aufweisen, sich also bei Druckbelastung elastisch verformen und danach wieder in ihre ursprüngliche Gestalt zurückkehren. Diese Materialien sind für die Abdichtung besonders geeignet. Die erste Dichtkomponente kann z.B. aus EPDM, TPE oder NBR bestehen. Vor allem TPE eignet sich besonders für das Zweikomponentenspritzgussverfahren.

Die zweite Dichtkomponente kann aus einem harten Kunststoff oder Metall bestehen. Beim Kunststoff kann es sich z.B. um PP oder PE handeln, als Metall kann z.B. Messing eingesetzt sein.

Ferner wird ein Gehäuse eines Durchflussmessers mit einem Gehäuseanschlussstutzen unter Schutz gestellt, an dem eine Dichtung für die Verbindung mit einem Rohrende oder einer Rohrtülle angeordnet ist, wobei die Dichtung nach mindestens einem der oben beschriebenen Merkmale ausgebildet ist. Der Durchflussmesser kann demnach sogleich mit der Dichtung ausgestattet sein, wodurch ein montagefreundlicher Einbau ermöglicht wird.

Der Gehäuseanschlussstutzen oder das ganze Gehäuse des Durchflussmessers können aus Kunststoff bestehen. Obwohl Kunststoff bei Temperaturschwankungen mit entsprechenden Wärmedehnungen reagiert, kann die Verbindungsstelle zwischen Gehäuse bzw. Gehäuseanschlussstutzen und Rohrende mittels der erfindungsgemäßen Dichtung zuverlässig abgedichtet werden. Auch bei Warmwasseranwendungen ist ein Längenausgleichselement im Zähler mittels dieser Dichtung nicht erforderlich.

Die Erfindung ist anhand eines Ausführungsbeispiels gemäß den Zeichnungsfiguren näher erläutert. Diese zeigen:

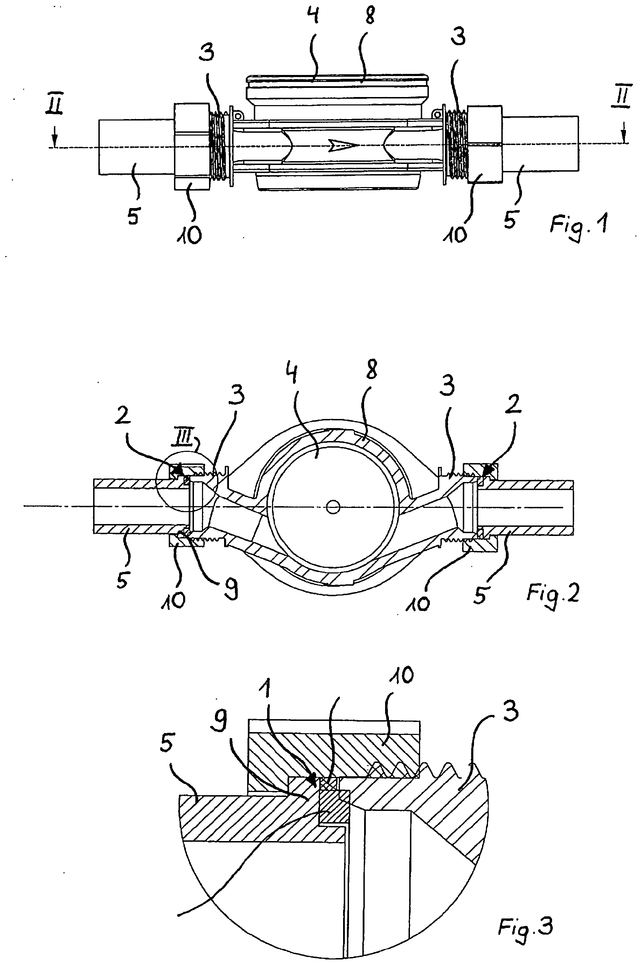

- Fig. 1:: Seitenansicht auf einem in eine Rohrleitung eingesetzten Durchflussmesser,
- Fig. 2:: Draufsicht auf den in einer Rohrleitung eingesetzten Durchflussmesser gemäß Fig. 1 entlang der Schnittlinie II-II sowie
- Fig. 3:: Detaildarstellung III eines Ausschnitts des Verbindungsbereichs von Rohrtülle und Gehäuseanschlussstutzen aus Fig. 2.

Bezugsziffer 1 bezeichnet die Dichtung, welche für den Verbindungsbereich 2 zwischen einem Gehäuseanschlussstutzen 2 eines Durchflussmessers 4 sowie einer Rohrtülle 5 vorgesehen ist. Die Dichtung 1 umfasst eine erste Dichtkomponente 6 aus weichem Material sowie eine zweite Dichtkomponente 7 aus einem Material, das härter ist als das der ersten Dichtkomponente 6. Die Eigenschaften der beiden Dichtkomponenten 6 und 7 werden damit in der Dichtung 1 vereint. Das Gehäuse 8 des Durchflussmessers 4 und damit auch der Gehäuseanschlussstutzen 3 bestehen aus Kunststoff, welcher im Vergleich z.B. zu Messing einen relativ hohen Ausdehnungskoeffizienten bzw. Wärmeausdehnungskoeffizienten aufweist. Kommt es zu Temperaturschwankungen - die Temperaturspreizungen in diesem Einsatzbereich können bis zu 90°C, z.B. wegen durchfließendem Warmwasser, betragen - reagiert das Kunststoffgehäuse mit entsprechenden Wärmeausdehnungen bzw. Schrumpfungen. Die Dichtung 1 mit ihren beiden unterschiedlichen Komponenten ist für die Verbindung zwischen einem solchen Kunststoffgehäuse und einer Rohrtülle besonders geeignet, da sie sich auch in diesen Situationen reversibel verhält. Ferner kann es auch vorkommen, dass die Anschlussstelle zwischen den beiden Rohrtüllen 5 starr ist, so dass sich eine relativ bewegungslose Einbausituation darstellt. Auch für diese Fälle ist die Dichtung 1 besonders geeignet.

Wie aus den Zeichnungsfiguren ersichtlich ist, wird der Gehäuseanschlussstutzen 3 in den Flansch 9 der Rohrtülle 5 eingeschraubt. Zwischen Flansch 9 und Stirnseite des Gehäuseanschlussstutzens 3 befindet sich die Dichtung 1. Die Verbindung ist mit einer Überwurfmutter 10 gesichert.

Die erste Dichtkomponente 6 ist im Wesentlichen für die Abdichtung des Verbindungsbereichs bzw. der Verbindungsstelle 2 und die zweite Dichtkomponente 7 im Wesentlichen für die Kraftaufnahme der Anpresskraft zwischen Rohrtülle 5 und Gehäuseanschlussstutzen 3 vorgesehen. Die zweite sowie harte Dichtkomponente 7 verhindert gleichzeitig, dass die weiche Dichtkomponente zu stark zusammengedrückt und damit beschädigt wird. Die zweite Dichtkomponente 7 erfüllt demnach auch die Funktion der Begrenzung des Zusammendrückens der gesamten Dichtung 1 und gewährleistet damit, dass sich die Dichtung 1 reversibel verhält.

Die erste Dichtkomponente 6 und die zweite Dichtkomponente 7 stehen in direktem Kontakt zueinander, so dass die jeweiligen Funktionen unmittelbar an der entsprechenden Stelle wirksam werden.

Die zweite Dichtkomponente 7 ist außerhalb der ersten Dichtkomponente 6 angeordnet, wobei beide Dichtkomponenten 6, 7 an dem Flansch 9 anliegen.

Die erste 6 und zweite Dichtkomponente 7 sind miteinander verbunden und als Zweikomponenten-Spritzgussteil gefertigt. Die Dichtung 1 ist somit einteilig und kann in montagefreundlicher Weise in die Verbindungsstelle 2 eingesetzt werden. Außerdem sind damit die beiden Dichtkomponenten 6, 7 dauerhaft und sicher miteinander verbunden.

Je nach Materialien der Dichtkomponenten kann auch die eine Dichtkomponente von der anderen hinter- oder zumindest teilweise umspritzt sein. Ferner können die Dichtkomponenten aber auch als separate Teile vorliegen.

Dabei ist die zweite Dichtkomponente 7 gegenüber der ersten Dichtkomponente 6 in Richtung Gehäuseanschlussstutzen 3 zurückversetzt angeordnet. Die zweite Dichtkomponente 7 weist eine geringere Stärke als die erste Dichtkomponente auf, so dass gewährleistet ist, dass die erste und weiche Dichtkomponente 6 ihre Dichtwirkung voll entfalten kann und gleichzeitig die zweite Dichtkomponente 7 nur der Kraftaufnahme dient.

Die erste Dichtkomponente 6 besteht aus einem Elastomer, Gummi oder Kautschuk, wie z.B. EPDM, TPE oder NBR. Besonders TPE eignet sich für das Zweikomponenten-Spritzgussverfahren.

Die zweite Dichtkomponente 7 besteht aus einem harten Kunststoff, wie z.B. PP oder PE. Dieser eignet sich ebenso für das Zweikomponenten-Spritzgussverfahren. Die zweite Dichtkomponente 7 kann auch aus Metall, z.B. Messing, bestehen, wobei die zweite Dichtkomponente 7 bei der Herstellung der Dichtung 1 von der ersten Dichtkomponente 6 hinter- oder zumindest teilweise umspritzt wird.

Wie oben bereits ausgeführt, besteht das gesamte Gehäuse 8 des Durchflussmessers 4 aus Kunststoff. Die Dichtung 1 ermöglicht es, eine zuverlässige, reversible Abdichtung zwischen diesem Kunststoffgehäuse und einer Rohrtülle 5 aus Metall zu schaffen.

### BEZUGSZEICHENLISTE

- 1): Dichtung
- 2): Verbindungsbereich
- 3): Gehäuseanschlussstutzen
- 4): Durchflussmesser
- 5): Rohrtülle
- 6): erste Dichtkomponente
- 7): zweite Dichtkomponente
- 8): Gehäuse
- 9): Flansch
- 10): Überwurfmutter

## Patentansprüche

1. Gehäuse eines Durchflussmessers (4) mit einem Gehäuseanschlussstutzen (3), an dem eine Dichtung (1) für die Verbindung mit einem Rohrende oder einer Rohrtülle (5) angeordnet ist, wobei der Gehäuseanschlussstutzen (3) oder das ganze Gehäuse aus Kunststoff bestehen, und die Dichtung (1) eine erste Dichtkomponente (6) aus weichem Material aufweist,
**dadurch gekennzeichnet, dass**
die Dichtung (1) zusätzlich mindestens eine zweite Dichtkomponente (7) aus einem Material umfasst, das härter ist als das der ersten Dichtkomponente (6),
die zweite Dichtkomponente (7) eine geringere Stärke als die erste Dichtkomponente (6) aufweist und
die erste Dichtkomponente (6) sowie die zweite Dichtkomponente (7) bündig am Flansch (9) des Rohrendes oder der Rohrtülle (5) anliegen und an der dem Gehäuseanschlussstutzen (3) zugewandten Seite eine Stufe bilden, wobei die zweite Dichtkomponente (7) gegenüber der ersten Dichtkomponente (6) zurückversetzt ist.

2. Gehäuse eines Durchflussmessers nach Anspruch 1,
**dadurch gekennzeichnet, dass**
die erste Dichtkomponente (6) im Wesentlichen für die Abdichtung des Verbindungsbereichs (2) und die zweite Dichtkomponente (7) im Wesentlichen für die Kraftaufnahme der Anpresskraft von Gehäuseanschlussstutzen (3) und Rohrende oder Rohrtülle (5) vorgesehen ist.

3. Gehäuse eines Durchflussmessers nach mindestens einem der Ansprüche 1 oder 2,
**dadurch gekennzeichnet, dass**
die erste (6) und zweite Dichtkomponente (7) in direktem Kontakt miteinander stehen.

4. Gehäuse eines Durchflussmessers nach mindestens einem der vorhergehenden Ansprüche,
**dadurch gekennzeichnet, dass**
die zweite Dichtkomponente (7) außen um die erste Dichtkomponente (6) angeordnet ist.

5. Gehäuse eines Durchflussmessers nach mindestens einem der Ansprüche 1 - 3,
**dadurch gekennzeichnet, dass**
die erste Dichtkomponente (6) außen um die zweite Dichtkomponente (7) angeordnet ist.

6. Gehäuse eines Durchflussmessers nach mindestens einem der vorhergehenden Ansprüche,
**dadurch gekennzeichnet, dass**
die erste (6) und zweite Dichtkomponente (7) separate Teile sind.

7. Gehäuse eines Durchflussmessers nach mindestens einem der Ansprüche 1 - 5,
**dadurch gekennzeichnet, dass**
erste (6) und zweite Dichtkomponente (7) miteinander verbunden sind.

8. Gehäuse eines Durchflussmessers nach mindestens einem der Ansprüche 1 - 5 und 7,
**dadurch gekennzeichnet, dass**
die Dichtung (1) als Zweikomponenten-Spritzgussteil ausgeführt ist.

9. Gehäuse eines Durchflussmessers nach mindestens einem der Ansprüche 1 - 5 und 7, 8,
**dadurch gekennzeichnet, dass**
die zweite Dichtkomponente (7) von der ersten Dichtkomponente (6) hinteroder zumindest teilweise umspritzt ist.

10. Gehäuse eines Durchflussmessers nach mindestens einem der vorhergehenden Ansprüche,
**dadurch gekennzeichnet, dass**
die erste Dichtkomponente (6) aus einem Elastomer, Gummi oder Kautschuk besteht.

11. Gehäuse eines Durchflussmessers nach mindestens einem der vorhergehenden Ansprüche,
**dadurch gekennzeichnet, dass**
die zweite Dichtkomponente (7) aus einem harten Kunststoff oder Metall besteht.

## Claims

1. Housing of a flow meter (4) having a housing connector stub (3), on which a seal (1) for the connection to a pipe end or a pipe bushing (5) is arranged, the housing connector stub (3) or the entire housing consisting of plastic, and the seal (1) having a first sealing component (6) made from a soft material, **characterized in that** the seal (1) additionally comprises at least one second sealing component (7) made from a material which is harder than that of the first sealing component (6), the second sealing component (7) has a lower thickness than the first sealing component (6), and the first sealing component (6) and the second sealing component (7) bear flush against the flange (9) of the pipe end or the pipe bushing (5) and form a step on the side which faces the housing connector stub (3), the second sealing component (7) being set back in comparison with the first sealing component (6).

2. Housing of a flow meter according to Claim 1, **characterized in that** the first sealing component (6) is provided substantially for sealing the connecting region (2), and the second sealing component (7) is provided substantially for absorbing the pressing force of the housing connector stub (3) and the pipe end or the pipe bushing (5).

3. Housing of a flow meter according to at least one of Claims 1 and 2, **characterized in that** the first sealing component (6) and the second sealing component (7) are in direct contact with one another.

4. Housing of a flow meter according to at least one of the preceding claims, **characterized in that** the second sealing component (7) is arranged around the outside of the first sealing component (6).

5. Housing of a flow meter according to at least one of Claims 1 to 3, **characterized in that** the first sealing component (6) is arranged around the outside of the second sealing component (7).

6. Housing of a flow meter according to at least one of the preceding claims, **characterized in that** the first sealing component (6) and the second sealing component (7) are separate parts.

7. Housing of a flow meter according to at least one of Claims 1 to 5, **characterized in that** the first sealing component (6) and the second sealing component (7) are connected to one another.

8. Housing of a flow meter according to at least one of Claims 1 to 5 and 7, **characterized in that** the seal (1) is configured as a two-component injection moulded part.

9. Housing of a flow meter according to at least one of Claims 1 to 5, 7 and 8, **characterized in that** the second sealing component (7) is overmoulded or at least partially encapsulated by the first sealing component (6).

10. Housing of a flow meter according to at least one of the preceding claims, **characterized in that** the first sealing component (6) consists of an elastomer, vulcanized rubber or natural rubber.

11. Housing of a flow meter according to at least one of the preceding claims, **characterized in that** the second sealing component (7) consists of a hard plastic or metal.

## Revendications

1. Boîtier d'un débitmètre (4) comprenant un manchon de raccordement de boîtier (3) sur lequel est disposée une garniture d'étanchéité (1) pour la liaison avec une extrémité de tube ou une douille de tube (5), le manchon de raccordement de boîtier (3) ou la totalité du boîtier étant constitué de matière plastique et la garniture d'étanchéité (1) possédant un premier composant d'étanchéité (6) en une matière souple,
**caractérisé en ce que**
la garniture d'étanchéité (1) comprend en plus au moins un deuxième composant d'étanchéité (7) en une matière qui est plus dure que celle du premier composant d'étanchéité (6),
le deuxième composant d'étanchéité (7) possède une épaisseur plus faible que celle du premier composant d'étanchéité (6) et
le premier composant d'étanchéité (6) ainsi que le deuxième composant d'étanchéité (7) reposent à fleur sur la bride (9) de l'extrémité de tube ou de la douille de tube (5) et forment un palier du côté qui fait face au manchon de raccordement de boîtier (3), le deuxième composant d'étanchéité (7) étant décalé vers l'arrière par rapport au premier composant d'étanchéité (6).

2. Boîtier d'un débitmètre selon la revendication 1, **caractérisé en ce que** le premier composant d'étanchéité (6) est conçu sensiblement pour réaliser l'étanchéité de la zone de liaison (2) et le deuxième composant d'étanchéité (7) sensiblement pour absorber la force de pressage du manchon de raccordement de boîtier (3) et de l'extrémité de tube ou de la douille de tube (5).

3. Boîtier d'un débitmètre selon au moins l'une des revendications 1 ou 2, **caractérisé en ce que** le premier (6) et le deuxième composant d'étanchéité (7) se trouvent en contact direct l'un avec l'autre.

4. Boîtier d'un débitmètre selon au moins l'une des revendications précédentes, **caractérisé en ce que** le deuxième composant d'étanchéité (7) est monté à l'extérieur autour du premier composant d'étanchéité (6).

5. Boîtier d'un débitmètre selon au moins l'une des revendications 1 à 3, **caractérisé en ce que** le premier composant d'étanchéité (6) est monté à l'extérieur autour du deuxième composant d'étanchéité (7) .

6. Boîtier d'un débitmètre selon au moins l'une des revendications précédentes, **caractérisé en ce que** le premier (6) et le deuxième composant d'étanchéité (7) sont des pièces séparées.

7. Boîtier d'un débitmètre selon au moins l'une des revendications 1 à 5, **caractérisé en ce que** le premier (6) et le deuxième composant d'étanchéité (7) sont reliés ensemble.

8. Boîtier d'un débitmètre selon au moins l'une des revendications 1 à 5 et 7, **caractérisé en ce que** la garniture d'étanchéité (1) est réalisée sous la forme d'une pièce moulée par injection à deux composants.

9. Boîtier d'un débitmètre selon au moins l'une des revendications 1 à 5 et 7, 8, **caractérisé en ce que** le premier composant d'étanchéité (6) est injecté par l'arrière sur le deuxième composant d'étanchéité (7) ou surmoule au moins partiellement celui-ci.

10. Boîtier d'un débitmètre selon au moins l'une des revendications précédentes, **caractérisé en ce que** le premier composant d'étanchéité (6) se compose d'un élastomère, de gomme ou de caoutchouc.

11. Boîtier d'un débitmètre selon au moins l'une des revendications précédentes, **caractérisé en ce que** le deuxième composant d'étanchéité (7) se compose d'une matière plastique dure ou de métal.
